# EUROPEAN PATENT APPLICATION

(11) **EP 2 866 411 A1**
(43) Date of publication of application: **29.04.2015**
(21) Application number: 14190036.5
(22) Date of filing: 23.10.2014
(51) Int. Cl.: H04L 29/06

(54) **Method and system for detecting unauthorized access to and use of network resources with targeted analytics**

(30) Priority: 24.10.2013 US 201314061835
(71) Applicant: Cyber-Ark Software Ltd., 4970602 Petach-Tikva (IL)
(72) Inventor: Dulkin, Andrey, 4648217 Herzlia (IL); Sade, Yair, 4658036 Herzlia (IL); Adar, Roy, 3604719 Kiryat-Tivon (IL); Shmueli, Aviram, 6228719 Tel-Aviv (IL)
(74) Representative: Dennemeyer & Associates S.A.

(57) **Abstract**

Methods and systems are disclosed for detecting improper, and otherwise unauthorized actions, associated with network resources, the actions including access to the resource and activity associated with the resource. The unauthorized actions are detected by analyzing action data of user actions employing accounts managed by a privileged access management system and associated with a network resource against profiles and rules to discover anomalies and/or deviations from rules associated with the network resource or accounts.

## Description

### BACKGROUND

The present invention, in some embodiments thereof, relates to systems and methods for detecting unauthorized access to and use of resources on a network.

Privileged accounts are accounts defined in machines, systems, and applications, that have high operation permissions. Privileged operation on many resources, which are on, or otherwise linked to a network, are enabled by employing privileged accounts. Unauthorized use of a privileged account, and subsequent unauthorized access to a network resource, creates a legal liability and a business risk for an organization, as well as a security risk. Additionally, such unauthorized access may be indicative of an attack, for example, illegally gaining access to a file, resource, and/or network, on the target resource of the enterprise.

Privileged accounts include shared and administrative accounts, including accounts used by service providers. Exemplary privileged accounts include root accounts, which are the most privileged accounts on Unix systems. A root account provides its users with the ability to carry out all aspects of system administration, such as adding, changing, terminating or deleting user accounts, changing user passwords, examining log, files, and installing software. Accordingly, the user, for example, the person or entity, with the root account, has almost absolute control over the system or resource which he has accessed via the root account. Another example of privileged accounts is the Local Administrator or the Domain Administrator accounts in Windows® machines and networks. Still other privileged accounts include administrator accounts for an organization's machines, applications and services in the cloud, which reside outside the organization's network.

Privileged accounts, such as root accounts, are often shared by groups of systems administrators. With privileged access to a group of individuals or entities, there is presented a challenge in action attribution, access control, activity monitoring, and other aspects of privileged account management. Moreover, many government and corporate regulations require that privileged accounts be managed, so that access is controlled, limiting unauthorized access and damage to the systems or resources, through which access is granted via the privileged accounts.

### SUMMARY

According to some embodiments of the present invention, there is provided a computer-implemented method performed by a computer system for detecting improper actions associated with a resource accessible via a communications network. The method comprised, obtaining, by a computer system, input data representative of information on client actions for an account associated with a resource accessible via the communications network, the account being managed by a privileged access management system; building, by the computer system, a behavior profile for an entity associated with the resource, the profile built based on a statistical analysis of the input data; obtaining, by a computer system, additional input data representative of information on client actions for an account associated with a resource accessible via the communications network, the account being managed by a privileged access management system, and, analyzing, by the computer system, the additional input data against the profile to detect anomalies.

Optionally, the profile is built dynamically.

Optionally, the profile is fixed in time.

Optionally, the method additionally comprises, analyzing, by the computer system, the additional input data against predefined rules to detect deviations from the rules.

Optionally, when a deviation from the predefined rules is detected by the computer system, the computer system takes further action.

Optionally, the entity is selected from the group consisting of: a human, application, client, device, target, machine, account, and command and combinations thereof.

Optionally, the entity is selected from the group consisting of: a privileged user or a group of privileged users, a resource or a group of resources, and a privileged command or a set of privileged commands.

Optionally, the statistical analysis is based on metrics selected from the group consisting of: time, date, rate of input, Internet Protocol (IP) or IP range, geographical location, type of events, success/failure indication, input metadata, and, input content, or a combination thereof.

Optionally, when an anomaly is detected by the computer system, the computer system takes further action.

Optionally, the further action includes issuing alerts.

Optionally, the input data includes reports from the resource about the client actions associated with the resource.

Optionally, the client actions include access to the account associated with the resource.

Optionally, the client actions include activity associated with the resource.

Optionally, the account is a privileged account managed by a privileged account management system.

Optionally, the input data is obtained from the privileged account management system.

Optionally, the resource is selected from the group consisting of: servers, computers, computer systems, computer devices, mobile devices, network devices, databases, computer components, computer modules, machines, engines, software, and applications.

Other embodiments of the present invention are directed to a computer system for detecting improper actions associated with a resource accessible via a network. The computer system comprises: a storage medium for storing computer components; and, a computerized processor for executing the computer components. The computerized components comprise: a first component for obtaining input data representative of information on client actions for an account associated with a resource accessible via the communications network, the account being managed by a privileged access management system; a second component for building a behavior profile for an entity associated with the resource, the profile built based on a statistical analysis of the input data; the first component for obtaining additional input data representative of information on client actions for an account associated with a resource accessible via the communications network, the account being managed by a privileged access management system, and, a third component for analyzing the additional input data against the profile to detect anomalies.

Optionally, the computer system additionally comprises a fourth component for analyzing the additional input data against predefined rules to detect deviations from the rules.

Optionally, the computer system additionally comprises a fifth component for generating alerts to at least one location in response to the detection of at least one anomaly or a deviation from the predefined rules.

Optionally, the entity is selected from the group consisting of: a human, application, client, device, target, machine, account, and command, and combinations thereof.

Optionally, the entity is selected from the group consisting of: a privileged user or a group of privileged users, a resource or a group of resources, and a privileged command or a set of privileged commands.

Optionally, the statistical analysis is based on metrics selected from the group consisting of: time, date, rate of input, IP or IP range, geographical location, type of events, success/failure indication, input metadata and input content, and combinations thereof.

Still other embodiments of the present invention are directed to a computer usable non-transitory storage medium having a computer program embodied thereon for causing a suitable programmed system to detect the authorization status of an action associated with a resource, accessible via a network, by performing the following steps when such program is executed on the system. The steps comprise: obtaining input data representative of information on client actions for an account associated with a resource accessible via the communications network, the account being managed by a privileged access management system; building a behavior profile for an entity associated with the resource, the profile built based on a statistical analysis of the input data; obtaining additional input data representative of information on client actions for an account associated with a resource accessible via the communications network, the account being managed by a privileged access management system, and, analyzing the additional input data against the profile to detect anomalies.

Optionally, the aforementioned steps additionally comprise: analyzing the additional input data against predefined rules to detect deviations from the rules.

Throughout this document, a "network resource" includes any server, computer, computer system, computer device, computer component or module, machine, engine, software, application, or other hardware or software, or combinations thereof, or the like, which is linked either directly or indirectly to a communications network, the communications network, such as a Local Area Network (LAN), Wide Area Network (WAN), including public networks such as the Internet.

Throughout this document, a "target resource" includes any aforementioned "network resource," which requires authentication and the grant of operation privileges in accordance with an account, i.e., a privileged account. The privileged accounts for the "target resources" are managed by a Privileged Account Management System (PAMS), detailed below. "Target resources" include machines, applications, application servers, and other systems which require account authentication and grant operation privileges in accordance with the corresponding privileged account. Exemplary "target resources" include execution environments, operating systems, such as Linux®, application servers, and applications, including web applications.

Throughout this document, a "machine" refers to an execution environment, for example, for computer software, programs and the like, including a physical or virtual hardware environment and an operating system. Examples of "machines" include computers and computing or computer systems (for example, physically separate locations or devices), servers, computer and computerized devices, processors, processing systems, computing cores (for example, shared devices), and similar systems, modules and combinations of the aforementioned.

Throughout this document, a "privileged account" includes an account defined in a machine or system, which holds high operation permissions, and is any account where privileges are defined under one or more rules. A "privileged account" may be a shared account. One such privileged account is a "root account," which for example, on a Linux machine enables the user to have complete access to all resources and available operations for the machine. Privileged accounts include shared and administrative accounts, application and machine accounts, accounts used by service providers and more.

Throughout this document, a "Privileged Account Management System (PAMS)" includes a system which manages privileged accounts, access and actions in accordance with organizational policy, mainly by controlling and managing the credentials to privileged accounts. The main features of PAMS include user authentication, mapping of which users are allowed usage of which privileged account and logging of privileged accounts usage. Additional features include monitoring of actions performed by privileged users.

Throughout this document, a "user" or "users" refers to an operator of a computer who has accessed the target resource though a corresponding account and attempts to perform or performs an operation on a machine of the target resource. The "user" or "users" may also be computer operators who wish to escalate their privileges for the target resource. Alternatively, the "user" or "users" refers to operators of computers who want to connect to the PAMS to request usage of a specific privileged account. Usually, this will be an administrator using a personal account, but other instances are possible, such an operator using a shared account for accessing the target resource. The organizational established procedure is for the user to authenticate to PAMS and then receive access or operation permissions for the privileged account which holds the required privileges. In some implementations, "user" may also be an application, or a software or hardware module, which accesses PAMS to retrieve credentials needed for its operation.

Throughout this document, a "target account" is an account managed by PAMS to which a user wishes to connect.

Throughout this document, "records," also referred to as "input" or "logs," include information reported by PAMS to the analytics module of embodiments of the present invention.

Throughout this document, a "profile," also referred to as "behavioral pattern" is a result of a statistical calculation on records that represents a specific aspect of the inspected behavior. Profiles are deduced and updated over time. An example profile may be the number of "credential retrieval" operations a user performs per hour over a period of a day.

Throughout this document, "aggregations" include counts or collections of several records that are relevant to a specific profile.

Throughout this document, an "anomaly" includes a statistically significant deviation from a profile. For example, a profile may specify that a target account is accessed 5 times in the period of 10:00-11:00 and a tolerance level is 2 (meaning up to 7 accesses will not be considered an anomaly). If 10 records describing access to this target account were received on a specific date for the period of 10:00-11:00, this will be considered an anomaly.

Throughout this document, "rules" include pre-defined limits or constraints, a deviation from which should generate an alert.

Unless otherwise defined, all technical and/or scientific terms used herein have the same meaning as commonly understood by one of ordinary skill in the art to which the invention pertains. Although methods and materials similar or equivalent to those described herein may be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE DRAWINGS

Some embodiments of the present invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

Attention is now directed to the drawings, where like reference numerals or characters indicate corresponding or like components.

In the drawings:
FIG. 1 is a diagram of an exemplary environment on which embodiments of the present invention are performed;
FIG. 2A is a diagram of the architecture of the system on which embodiments of the present invention are performed;
FIG. 2B is a diagram of an exemplary implementation for the system of the present invention are performed;
FIG. 3 is flow diagram of a process performed in the environment of FIG. 1; and
FIG. 4 is a flow diagram of a process in accordance with Example 3.

### DETAILED DESCRIPTION

Embodiments of methods and systems of the present invention are disclosed for detecting improper, and otherwise unauthorized actions, associated with network resources. The actions include access to the resource and activity associated with the resource. The unauthorized actions are detected by analyzing action data of a client action associated with the network resource against a profile, and/or rules associated with the actions, for the authorized performance of the action associated with the resource. The profile is built for one or more entities associated with the account and the resource, to which the account is associated. The profile may be fixed, having been built previously, or built cumulatively, as data on actions of entities associated with the account or the resource associated with the account is obtained by the system which builds the profile, upon its input into the system. The system uses this newly obtained data to recalculate the profile, accounting for this new data. This cumulative building of the profile typically occurs dynamically, in that the profile is being updated constantly with the newly obtained data.

Embodiments of the present invention allow a profile to be built based on a learned pattern of actions associated with a target resource, without interacting with a client to provide such behavior patterns. The profile is built based on actual monitoring of client actions with respect to the target resource, with current profiles updated cumulatively, and typically dynamically, based on the current activity of clients, associated with the target resource.

Some embodiments of the present invention are directed to management of accounts for resources, and determining if the access to the account is proper and authorized. Some embodiments of the present invention provide for access management to accounts for resources, in accordance with system rules and policies, for the authorized access to and use of accounts, for the requisite resource.

Some embodiments of the present invention are directed to detecting unauthorized access and subsequent unauthorized use of a target resource by analyzing user access and/or user actions. The user access is analyzed based on the user connecting with a privileged account to the target resource. User actions are analyzed based on actions associated solely with privileged accounts, which should not be performed for non-privileged accounts.

Some embodiments of the present invention are directed to adding another layer on top of an authorization layer for accounts, for example, privileged accounts. This additional layer includes an analytics layer, where the presence of absence of an anomaly from a profile, or a deviation from rules associated with the actions, is detected. Coupled with a proper authorization from the authorization layer, the absence of an anomaly or rule deviation indicates that the action associated with the resource is authorized. However, should an anomaly or rule deviation be detected, the action associated with the resource is not authorized.

Optionally, some embodiments of the present invention are installed and implemented externally from the target resource.

Some embodiments are directed to an analytics system that receives information from a privileged account management system (PAMS), and optional additional sensors in the organizational network. Privileged account management systems are commercially available from multiple vendors and the use of term "PAMS" in this description is not in any way limited to a specific product by a specific vendor. Privileged account management systems (PAMS) also function as privileged access management systems and privileged credentials management systems. The functionality provided by PAMS is described below.

Information received from PAMS includes, for example, 1) privileged accounts access logs, which may include the user, the target system, time, reason, user endpoint IP and location, success/failure, etc., and so on, with various possible contents of PAMS access logs being known; and, 2) privileged actions logs, which may include the user, the system on which the action was performed, user IP, what action was performed, time of action, success/failure and so on, with various possible contents of PAMS action logs being known. The analytics system processes the received information to discover anomalies and deviations from rules, and issues alerts based on its analysis.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, Radio Frequency (RF), etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider (ISP)).

Aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a non-transitory computer readable medium that can direct a computer, other programmable data processing apparatus, or other devices to function in a particular manner, such that the instructions stored on the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

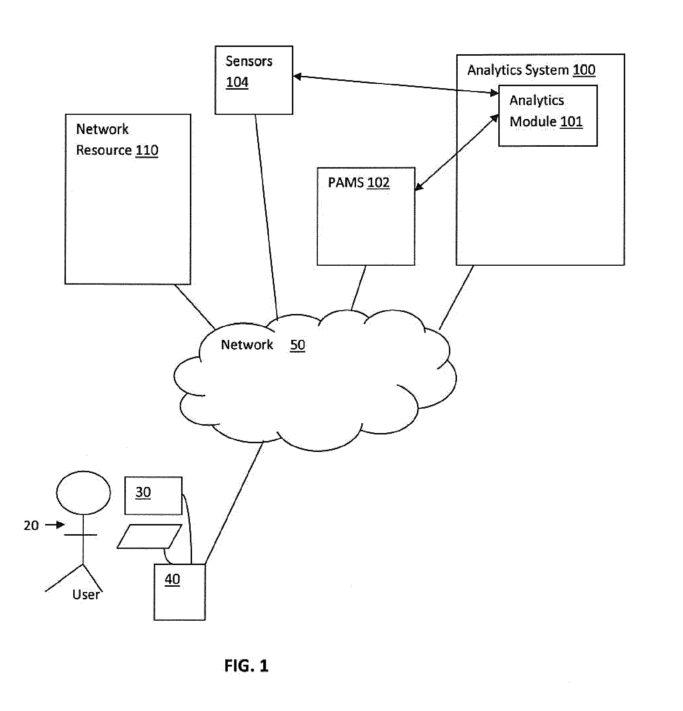

Reference is now made to FIG. 1, which shows an operating environment for a non-limiting exemplary system 100, also known as an analytics system, in accordance with some embodiments of the present invention. The analytics system 100 provides targeted analytics, which are used to build profiles for normal behavior with respect to target assets and their corresponding accounts, such as privileged accounts, to detect improper and anomalous actions associated with the target assets and their corresponding accounts. The analytics system 100 builds profiles for normal behavior with respect to entities operating in the system, such as users, target assets, their corresponding accounts and commands,. The analytics system 100 also stores predefined rules regarding what is considered normal and what is not. The analytics system 100 receives input as to actions and analyzes these actions against the profiles and the rules to detect anomalies. Should an anomaly or deviation from associated rules be detected, the analytics system 100 provides alerts. This detection enables mitigation of attacks that abuse privileged accounts, such as external threats to the enterprise and attacks from inside the enterprise.

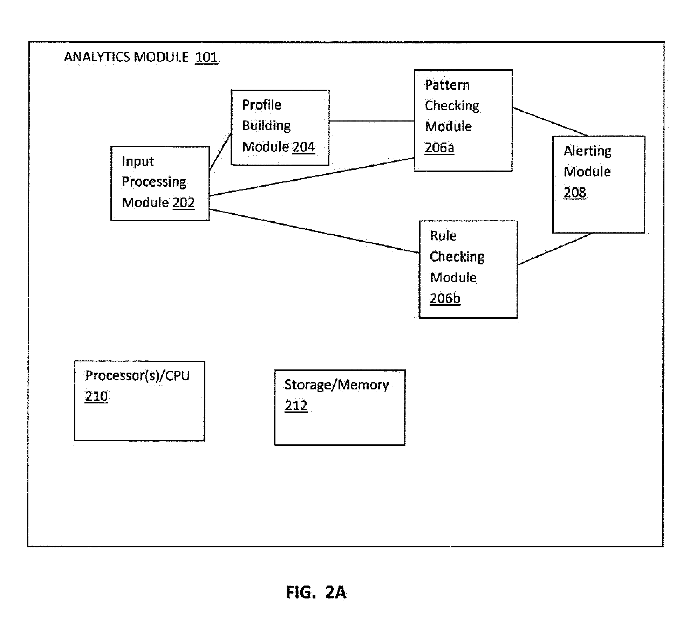

The analytics system 100 includes an analytics module 101 (shown in detail in FIG. 2A). Additionally, there is also a privileged account management system (PAMS) 102 in electronic communication with the analytics system 100. In addition, optional sensors 104 may be present, also in electronic communication with the analytics system 100. The sensors 104 serve to provide additional information to the analytics system 100. This information includes, for example, logs and records from devices (not shown) along the network 50, records from domain controllers, reports from Intrusion Detection/Prevention Systems (IDS/IPS), firewalls, agents on systems, agents on machines, and others. For example, such reports can be received from network monitoring products or from endpoint monitoring products.

The Analytics System 100, PAMS 102, and sensors 104 are addressable over a network 50, and linked to the network 50, either directly or indirectly. The network 50 is, for example, a communications network, such as a Local Area Network (LAN), or a Wide Area Network (WAN), including public networks such as the Internet. Users, represented by user 20, both authorized and unauthorized for the network resource 110, using a client computer (referred to herein as a "client") 40 and display 30, interact with the analytics system 100, PAMS 102, sensors 104 and network resources, represented by the network resource 110, via the network 50. Other users 20 may be system administrators and the like, and are identified herein as such.

The analytics system 100 couples with the PAMS 102, the sensors 104 and the network resource 110, for example, either linked via the network 50 or through direct connections. The network resource 110 is, for example, a target resource, which is accessed, for example, through target or privileged accounts. The target or privileged accounts are managed by PAMS 102, which is further detailed below.

The analytics system 100 utilizes hardware, software and combinations thereof, for detecting abuse or misuse of accounts for network resources 110, including target resources, by detecting behavioral anomalies or rules deviations for access and/or use of the resource and accounts, such as privileged accounts, therefor. While numerous components are detailed below, numerous servers, machines, devices, computer systems and the like may be linked, either directly or indirectly, to the network 50, for operation with the analytics system 100.

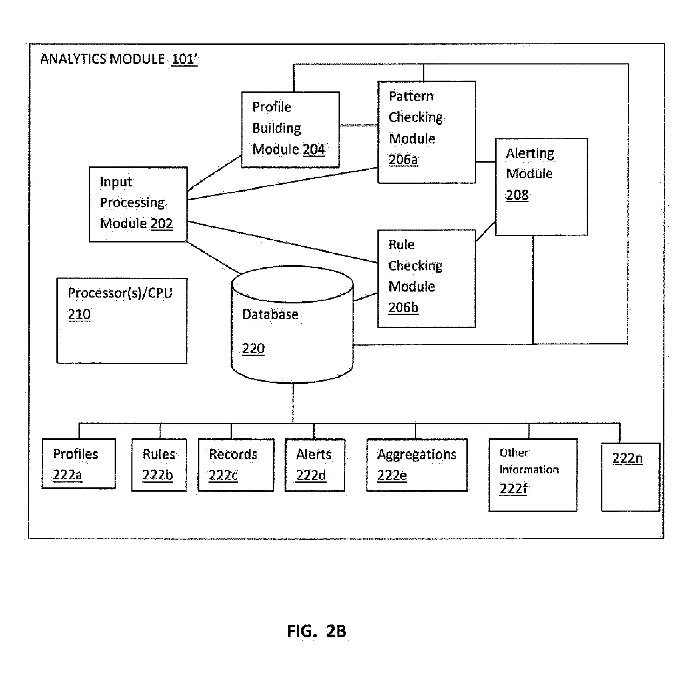

The analytics system 100, for example, is a computer system, and includes an analytics module 101, according to some embodiments of the present invention. The analytics module 101 is shown linked to PAMS 102, and the optional sensors 104, although other analytics system 100 links to PAMS 102 and the sensors 104 are also possible. The analytics module 101 is shown in detail in FIG. 2A and discussed below, while an exemplary implementation of the analytics module 101' is shown in detail in FIG. 2B, and discussed below.

PAMS 102 includes a system which manages privileged accounts, access and actions in accordance with organizational policy, mainly by controlling and managing the credentials, including credential retrieval data, to privileged accounts. The main features of PAMS 102 include user authentication, mapping of which users are allowed usage of which privileged account and logging of privileged accounts usage. Additional features include monitoring of actions performed by privileged users. In addition to its numerous functions and applications as described herein, PAMS 102 also functions, for example, as a privileged access management system and/or a privileged credential management system. PAMS 102 is also described in commonly owned U.S. Patent Application Serial No. 14/058,254, filed October 20, 2013, entitled: Method and System for Detecting Unauthorized Access to and Use of Network Resources, the disclosure of which is incorporated by reference in its entirety herein.

PAMS 102 is typically external with respect to the analytics system 100. PAMS 102 may be of singular or multiple components, as it may be formed of a plurality of computers, machines, devices, storage media, processors, devices, and other components, either directly connected to each other or linked together via the network 50. The PAMS 102 may be hardware, software, or combinations thereof.

The PAMS 102 is a system that, for example, manages privileged accounts, and other restricted access, associated with various network resources, for example target resources 110 linked to the network 50. The managed privileged accounts are administered by PAMS 102 in accordance with organizational rules and policies for each target resource, such as the network resource 110. PAMS 102 manages, for example, user authentication, mapping of users to the privileged accounts (for the specific resource) they are authorized to use, and logging the usage of the privileged accounts.

PAMS 102 is a system for managing privileged accounts. This system holds the credentials, including, for example, credential retrieval data, for privileged accounts, and a mapping of users, for example, system administrators, permitted to access the specific privileged accounts, according to respective organization-defined policies. When a user wants to use a specific target account, for example, the root account of a Linux machine, the user authenticates to PAMS 102, and then retrieves credentials for the target account, and uses these credentials to access the target account. Some PAMS 102 systems enable additional connection methods, such as establishing a connection to the target resource, without disclosing the credentials to the user. An important aspect of PAMS 102 is the support of various workflows, for example managerial approval for password retrieval, correlation with ticketing systems, one-time passwords and password replacement. These aspects of PAMS 102 support organizational policies and procedures for network security and access control.

PAMS 102 may also be configured to provide additional functionality, which in addition to controlling access by privileged accounts, includes controlling the activity performed on target resources by the privileged accounts. For example, when a user is operating with a non-privileged user account on a Linux machine, and attempts to perform a privileged operation, such PAMS system can both provide the user with the relevant privileged account and verify that the activity the user attempts to perform is an allowed activity for this user. The latter is done by verifying user attempted activity against a policy stored in PAMS. This PAMS 102 controls such privileged activity, and also stores the policies, which describe the permitted privileged activity for every user and the limitations or conditions for these activities.

The PAMS 102, may be, for example, a system commercially available as PIM (Privileged Identity Management)/PSM (Privileged Session Management) Suite, from CyberArk, wwwdotcyberarkdotcom.

The optional sensors 104, are located along the network 50, but may also be located at the analytics system 100, PAMS 102, and/or the target resource 110. The sensors 104 provide information to the analytics module 101 of the analytics system 100. This information is typically additional to that information received from PAMS 102, detailed below. The sensors 104 may also serve to collect, logs and records from devices (not shown) along the network 50, the devices associated with the network resources or accounts therefor, records from domain controllers, reports from Intrusion Detection/Prevention Systems (IDS/IPS), firewalls, agents on systems, and agents on machines, or other security controls, and the like. The sensors 104 may provide additional data, for example actual reporting from the target resource 110 that a login from a specific target account was detected. The aforementioned sensors 104 are optional, and accordingly, need not be present for proper operation of the embodiments detailed herein. For example, such a sensor may be an agent deployed on target resources, which reports additional information on the state of the resource. Another example of such a sensor is a network monitoring sensor that reports connections between two machines connected to the same network 50.

The network resource 110, is representative of multiple network resources, and links either directly or indirectly to the network 50. The network resource 110 maps to the analytics system 100, PAMS 102. The network resource 110 may also be directly connected to the analytics system 100. The network resource 110, for example, is typically a target resource, and accordingly, "network resource" and "target resource" are used interchangeably, below. The network resource includes, for example, servers, computers, computer systems, computer devices, mobile devices, network devices, databases, computer components, computer modules, machines, engines, software, applications, and combinations thereof. While the network resource 110 is shown as a single device or machine, it may be a plurality of devices or machines.

FIG. 2A, to which attention is now directed, shows the architecture of the analytics module 101 for the analytics system 100. The analytics system 100 analyzes privileged accounts access logs and privileged action logs, which are provided by PAMS 102. In this figure, as well as FIG. 2B, the components, including modules, shown a connected by lines may indicate that a process, step or the like completed by one component, may trigger action in the next component (to the right of the component which just completed the process or step). For example, the input processing module 202 may inform the profile building module 204 that new input is available for profile building. The availability of this new input can trigger the profile building module to start.

The analytics module 101 correlates the information from the aforementioned logs with additional information, obtained from optional sensors 104, and the like. The analytics module 101 includes the profile building module 204, which builds profiles of normal behaviors, and based on these built behaviors discovers anomalies. Additionally, the analytics module 101 checks for deviations from predefined rules. When an anomaly (pattern checking module 206a) or deviation from the rules (rule checking module 206b) is discovered, optionally an alert is provided, by the alerting module 208, thus enabling further action to mitigate the threat indicated by detected unauthorized user behavior. Accordingly, this anomaly and/or rule deviation detection provides a second security layer, which is used on top of the first or base security layer, provided by PAMS 102, as detailed above.

The analysis module 101 also includes various modules, such as an input processing module 202, profile building module 204, pattern checking module 206a, rule checking module 206b, and an optional alerting module 208. The analysis module 101 also includes processor(s) 210 and storage/memory 212 linked to each other, either directly or indirectly. While single components are shown for the modules 202, 204, 206a, 206b, 208, processors 210, storage/memory 212, this is representative only, plural components are permissible. The modules 202, 204, 206a, 206b, 208 may be hardware, software, or combinations thereof, and may include their own processors and/or storage.

The input processing module 202 processes input obtained from PAMS 102 and the optionally sensors 104 in the organizational network 50. The information is obtainable from PAMS 102, by being sent from PAMS 102 to the input processing module 202, or alternately, pulled from PAMS 102, as the input processing module 202 retrieves this information from PAMS 102, in response to a signal, indicator or the like. The sensors 104, if present, typically send information to the input processing module 202, but the input processing module 202 can also retrieve the information from the sensors, upon receiving an indicator, signal, or the like, or via a monitoring arrangement.

The input module 202, for example, processes the obtained information including records and logs, access and activity logs, and other information. This processing includes converting the obtained information into data in formats acceptable for the profile building module 204 and the storage 220 or database 222 (FIG. 2B). In the analytics module 101' of the exemplary embodiment of FIG. 2B, this information is also stored in the records repository 222c.

The profile building module 204 receives data from the input processing module 202, and builds profiles, associated with a network resource. The profiles are formed based on behavioral patterns. The behavioral patterns are typically derived from statistical analysis algorithms, with data for the statistics compiled cumulatively, each time input is received by the input module 202, and subsequently obtained by the profile building module 204. This cumulative building of the profile typically occurs dynamically, as profile building is a constantly on-going process, with profiles being constantly updated, typically in real time. Some profiles may not be updated in real time, representing a normal behavior at a specific period in the past.

Such profiles are representations of learned entity behavior with regards to one or more metrics, such as time, date, rate of input, IP or IP range, geographical location, type of events, success/failure indication, input metadata, input content and others. For example, a profile may represent the hourly rate of credential retrieval operations performed by a specific system administrator for a specific target resource, over the course of a typical workday. The modeled behavioral patterns are derived from a statistical analysis of parameters which may include metrics such as, time of day, access distribution for a specific user or a group of users, originating internet protocol (IP) addresses distribution for a specific user or group of users, the user's rate of access to a target of privileged account, and the time of day or time of week access for a specific target or privileged account, date, rate of input, IP or IP range, geographical location, type of events, success/failure indication, input metadata, and, input content. Modeled behavioral patterns may also include typical actions performed by the user in accessing or taken actions with the target or privileged account associated with the network resource, and typical actions performed on the target or privileged account.

For some types of profiles or analysis, an aggregation of multiple records may have to be accumulated, before the profile building may begin.

As explained above, a profile represents information regarding three aspects - the entity or combination of entities for which this profile is relevant, the metrics which this profile represents (time, date, IP and others) and the relevancy period for which this profile is valid - a profile can be an ongoing one, valid in real-time, or a historical one, representing entity behavior in some period in time. For example, a profile may represent the IP addresses from which credentials for a specific target resource were retrieved over the period of the first 3 months of 2013. In another example, a profile may represent the daily rate of commands performed by a specific administrator on all the target resources, over the period of 1 year and continuing until present time.

The entities are the various entities for which a profile may be built. The entity may be one of the following types, or a combination of one or more of the types.

One type of entity is the user. The user may include a human, application, client, device, or other human or machine, which has performed the requisite action (action subject to system 100 analysis). For example, such user can be a system administrator who accessed PAMS 102 to retrieve privileged accounts credentials.

Another type of entity is a target. The target may include a machine, account, application, device, command or other resource on which the requisite action was performed. For example, such target can be a network resource, such as a Linux server, for which a privileged account is managed by PAMS.

Yet another type of entity is the action which is performed on target resource by a user. For example, such action can be a command to shut down a Linux server, for which a profile can be built, describing the times of days that this command was executed in the entire network over the course of one year.

Thus, it is clear that profiles can be built describing the behaviors of users who use privileged accounts managed by PAMS, or the behaviors of resources accessed with these privileged accounts or the behavior of commands performed by employing these privileged accounts.

Additionally, the entity may be a group of one or several of the aforementioned types. For example, the entity may be a team of system administrators, a group of servers, such as those in a specific data center, or a set of privileged commands. For example, a profile may be built to describe the access pattern of a specific user to a specific system, such as a system administrator accessing an Active Directory server. Another exemplary profile which may be built is one that details the access pattern to a target, for example, a specific machine. Another exemplary profile may be built to describe the activation of a specific command. Yet another exemplary profile may be built to describe the access pattern for a combination of a specific user and a specific machine.

Dimensions, one or more, may be part of a profile which may be built. Exemplary dimensions include time of day, day of the week, day of month, month, year, of an action, rate, which is defined by the number of events in a period of time, of an action, and the location, from which the user performed an action. The locations include, for example, IP, the network segment and the geographical location of the user.

By adding these dimensions, for example, profiles can include the hourly rate of access (number of access events per hour) to a specific machine over a time period, such as a week. Another profile may describe the IPs from which a system administrator received credentials, such as over the course of a day. This may also include internal organizational network IPs during the day and IPs from home computers during the evening and night. Another profile can describe the countries from which commands, such as reboot commands, are performed on a specific machine, such as over a time period, such as one month. For example, this is of particular importance to a global enterprise, which has support teams in several countries, with several support teams accessing the same servers.

The profiles may also use relevancy periods. The profiles which have been built, and which are being updated cumulatively, may be updated to current system time. They can also be stored profiles for a previous period. For example, the system 100 is such that it is possible to describe the rate of access to a specific machine over a previous time period, for example, over a three month period of a prior year.

The pattern checking module 206a checks the input from PAMS 102 and optional sensors 104 against a profile to detect anomaly. This profile is, in effect, the "reference profile," against which the input is checked. This reference profile may be a profile of the same entity corresponding to the action from which the input has been generated.

The reference profile may also be a profile of a different entity, from the entity actually making the action associated with the target resource. For example, this reference profile would be used to analyze input which describes access by a system administrator to a specific Linux server, to the profile of a group of users (such as all the system administrators), or to the profile of an entire organization (enterprise), in accessing all Linux servers.

For example, the number of access events to a specific server on a specific date, within a specific time slot, may be checked against a profile for that specific server, or against the profiles of other servers in the same data center, or even against the profile of other servers of the same type in the entire organization (enterprise). Another example of using a reference profile is for checking the IP addresses used to retrieve credentials by a specific user against the profile for the group to which the user belongs, or against a different group. Another example involves checking the rate of specific commands, such as reboot commands or file access commands, by a specific user against the profile of the same user from a different relevancy period, e.g., a month ago.

Profiles may be built with various mathematical algorithms. For example, a profile for accessing a target may be built by calculating the "average" (mean) function on the number of accesses for every hour time slot during a 24 hour period. The resulting profile includes 24 time slots, each time slot (of the 24 time slots) having a number representing the average number of accesses to a specific target resource during each hour period of the day.

Other profiles may be built using the "max," "min," and other mathematical functions. These profiles may be calculated for time slots, other than hours of the day, with such time slots including, for example, "day of the week" and "day of the month," "work day vs. holiday."

Still other profiles may be calculated based on dimensions that are not subject to mathematical calculations. These dimensions may include, for example, location dimensions (e.g., IP, country). For such dimensions, other functions may also be relevant such as "union" or "distinct."

The above described methods of profile calculation make use on known methods in machine learning. One of these methods is learning a profile over a specific period, and then starting the anomaly detection. At this point, the profile is considered "learned" and it may either be fixed or continue to change and learn, for example, cumulatively. The period may be different for different algorithms/profile calculations - for example, for some profiles the period may be specified in advance ("for the average number of access to a target profile, the learning period is 3 months"), while for other profiles the period may be flexible, dependent on number of relevant records received by the analysis module and on their content. For example, a profile for the "IPs from which a user , e.g., user X, activates a command, e.g., command Z" may be "learned" after a 100 commands Z have been activated by user X. Another example is to constantly continue learning and adjusting the profile cumulatively.

The pattern checking module 206a functions to analyze input of user access or activity for the account against the profile, selected by the analytics system 100, to detect anomalies. The anomalies are defined by rules, policies and the like. These anomalies are reported to the alerting module 208, which, if present, issues alerts to locations internal and external to the analytics system 100.

The rule checking module 206b functions to analyze input of user access or activity for the privileged accounts against the rules, which are predefined limits or constraints and are stored in the storage 212. The analysis is used to discover deviations or violations (collectively "deviations") from the rules. Rule deviations are reported to the alerting module 208, which, if present, issues alerts to locations internal and external to the analytics system 100. For example, a rule may state that the maximum permitted number of privileged commands on a specific server in one hour is ten. Thus, if eleven privileged commands are run on this server in one hour, a deviation from rules is detected and an alert can be generated. Another example of a rule, is limiting permitted access to a production server during work hours to be only from local IP addresses (i.e. IP addresses which are internal to the organizational network). If an input representing access from an external IP address during work hours is received, a deviation from rules is detected and an alert can be generated.

The optional alerting module 208 receives information, including data from the pattern checking module 206a, and rule checking module 206b, and sends an alert to locations inside and outside of the analytics system 100. The alerts may be sent to numerous locations outside of the analytics system 100, including, for example, user interfaces, proprietary and non-proprietary, an organizational security information and event management system, e-mail accounts, cellular and regular telephones, and the like. The alerts may also be sent to the network resource 110, or a location controlling the network resource 110, which one received, may change the operation of the network resource 110, to avoid damage thereto.

The processors 210 control the operation of the components of the analysis module 101. The processors 210 are conventional processors, such as those used in servers, computers, and other computerized devices. The processors 210 may be arranged to have a central processing unit (CPU), for controlling the analytics system 100 and the analytics module 104. For example, the processors may include x86 Processors from AMD and Intel, Xenon® and Pentium® processors from Intel. Other processors, such as those of the modules 202, 204, 206a, 206b, 208, may be any of the aforementioned processors.

The storage/memory 212 is any conventional storage media. This is also the case for the storage specific to the modules 202, 204, 206a, 206b, 208. The storage/memory 212 stores machine executable instructions associated with the operation of the modules 202, 204, 206a, 206b, 208. Also, the storage/memory 212, although shown as a single component for representative purposes, may be multiple components, and may be outboard from the analytics system 100 and analytics module 101, and linked to the network 50.

FIG. 2B shows an exemplary implementation of the analytics module 101'. This exemplary implementation of the alternative analytics module 101' is similar to analytics module 101, detailed in FIG. 2A above. The same or similar components have the same element numbers and are in accordance with the descriptions provided above. The analytics module 101' utilizes a database 220, with repositories 222a-222n, as its storage, replacing the storage/memory 212 of the analytics module 101, of FIG. 2A.

In the analytics module 101', the modules 202, 204, 206a, 206b, 208, processors 210, and database 220 are all linked to each other, either directly or indirectly.

The database 220 stores records (from PAMS 102), input (from input module 202), profiles (from profile building module 204), rules (from the profile building module 204), information on profile checks (from pattern checking module 206a), information on rules checks (from rule checking module 206b), alerts (from alerting module 208) and other information. The storage is in repositories 222a-222n ("n" being the last in a series) for profiles 222a, rules 222b, records 222c, alerts, and locations to where the alerts were sent 222d, aggregations 222e and other information 222f, as well as repository 222n, representative of any additional repositories, useful in the operation of the database 220 and the analytics module 101'.

For example, in an exemplary operation of the database 220, incoming records, from PAMS 102, obtained by the input module 202, are stored in the records repository 222c. The processing of the records includes updating aggregations, which are stored in the aggregations repository 222e. The records are then retrieved from the records repository 222c by the profile building module 204, and the relevant behavioral patterns are updated for the requisite profile by the profile building module 204, in accordance with the newly received input. The updated profiles are stored in the profiles repository 222a. The records, stored in the records repository 222c, are checked against the relevant profiles, from the profile repository 222a, by the pattern checking module 206a, to detect anomalies. The records, stored in the records repository 222c, are also checked against predefined rules, by the rule checking module 206b, which are stored in the rules repository 222b. If an anomaly or rule deviation is detected, an alert is generated by the alerting module 208. The alert, and the locations to which it was sent are stored in the alerts repository 222d.

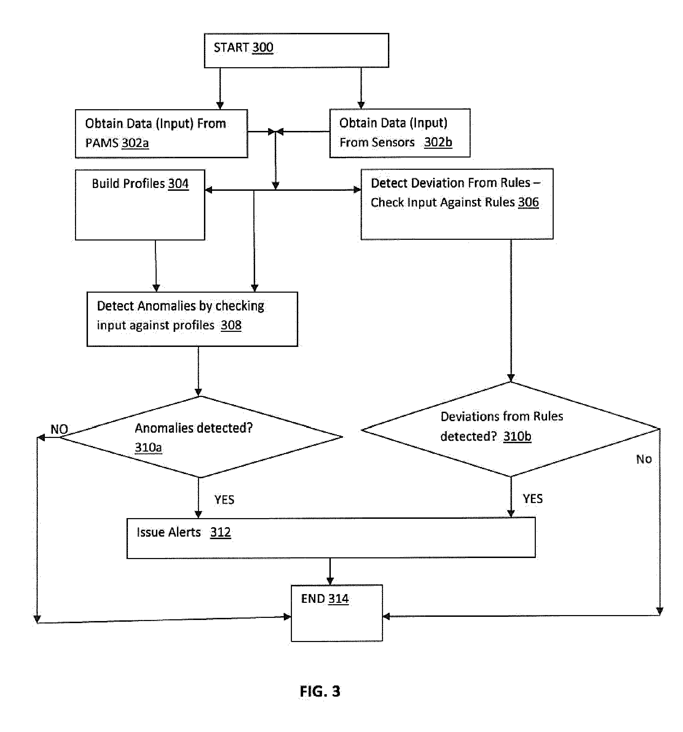

Attention is now directed to FIG. 3, which is a flow diagram detailing a process in accordance with an embodiment of the disclosed subject matter. Reference is also made to elements shown in FIGs. 1, 2A and 2B. The process and subprocesses of FIG. 3 are a computerized process performed by the analytics system 100, PAMS 102, and the optional sensors 104 with respect to the network resource 110. The processes and subprocesses of the aforementioned flow diagram are, for example, performed automatically and in real time.

The process begins at bock 300, the START block. The process moves to blocks 302a and 302b, which are performed in parallel. At block 302a, data (input) is obtained by the input processing module 202 from PAMS 102. For example, data, typically in the form of records from PAMS 102, is of two types.

A first type includes access records. These are records of, for example, credentials retrievals. For example, this may be a record of a user retrieving credentials for a target account along with additional information such as time, user endpoint IP and location, reason for access or activity (an example for such reason is "an existence of an open ticket in a ticketing system," or "need to install an update") and success/failure of credentials retrieval for a target account.

A second type includes activity records. These records include records of users having used target accounts to perform an action on the target resource. One such activity record may be the success/failure of a user attempting to use a target account to perform an action on the target resource.

Data (input) is also obtained from the optional sensors 104 by the input module 202, at block 302b. For example, the sensors 104 may report that a login for a target account was detected at a target resource.

The process then moves to parallel blocks 304 and 306, as well as to block 308. At block 304, profiles are built by the profile building module 204, as detailed above. The profile may be built originally by the computer system, based on behavior patterns of one or more entities associated with the resource or the account associated with the resource. The profiles are built to represent the behavior patterns of entities associated with privileged accounts for target resources, and are built by employing a statistical analysis on the received input. The profiles may be built and fixed in time, or built cumulatively, by being constantly updated, with the received input from blocks 302a and 302b. The received input from blocks 302a and 302b is added to the statistical data and the profile is recalculated to be updated, to account for this newly added input. This cumulative building is typically performed dynamically, by being constantly updated, with the updating typically being in real time.

From block 304, or from blocks 302a and 302b, the process moves to block 308, where anomalies are detected by checking the input, from blocks 302a and 302b against one or more profiles. The process moves to block 310a, where it is determined if an anomaly has been detected.

Returning to block 306, the input from blocks 302a and 302b is checked against predefined rules. The process moves to block 310b, parallel to block 310a, where it is determined if a deviation from the rules has been detected.

If an anomaly has been detected at block 310a, and/or a deviation from the rules has been detected at block 310b, the process moves to block 312. At block 312, the alerting module 208, if present, issues alerts to locations inside and outside of the analytics system 100. The alerts may be sent, both over the network 50, and over other lines of communication, to numerous locations outside of the analytics system 100, including, for example, user interfaces, proprietary and non-proprietary, an organizational security information and event management system, e-mail accounts, cellular and regular telephones, and the like. The alerts may also be sent to the network resource 110, or a location controlling the network resource 110, which one received, may change the operation of the network resource 110, to avoid damage thereto.

With the alert(s) issued, the process ends at block 314.

Returning to blocks 310a and 310b, if an anomaly has not been detected at block 310a, and/or a deviation from the rules has not been detected at block 310b, the process moves to block 314, where it ends.

### EXAMPLES

### Example 1

A PAMS 102 user is a system administrator, who manages Unix machines. He is authorized to retrieve access credentials to accounts for Unix machines. The system administrator, in the course of his work, requests access to a specific target account, for example, a "root" account, on a Unix machine.

PAMS 102 provides the user with the credentials, and sends records to the analytics module 101 of the analytics system 100 detailing the credentials retrieval. Over a time period, for example, several weeks, the profile building module 204 builds a profile and updates the profile with behavioral patterns including, number of credentials retrieved per hour by the user, rate of credentials retrieval by the user, distribution of Internet Protocols (IPs) addresses, e.g., addresses of computers, the user accesses PAMS 102 from.

For every received record, the record is analyzed against the existing behavioral patterns in the profile to determine whether there is an anomaly. Additionally, the record is checked against rules, associated with the profile. The rules may be, for example, 1) "there is a limit of 10 credentials retrievals by the user in an hour," and, 2) "there should not be access from any non-organizational IP." If an anomaly or rules deviation is detected, the alerting module 208 sends alerts to the organizational Security Information and Event Management System (SIEM), which is addressed and handled according to the organization's cybersecurity policy.

### Example 2

A PAMS 102 user retrieves credentials for a target account and uses them to access a target machine 110. PAMS 102 sends a record to the analytics module 101 of the analytics system 100, and an additional sensor 104, installed on the target machine 110, sends a record to the analytics module 101. The analytics module 101 builds a profile for the specific user access to the target machine 110 and updates it according to the received input. The profile may now be more specific or elaborate, as the additional sensor 104 provides additional information to the analytics module 101.

### Example 3

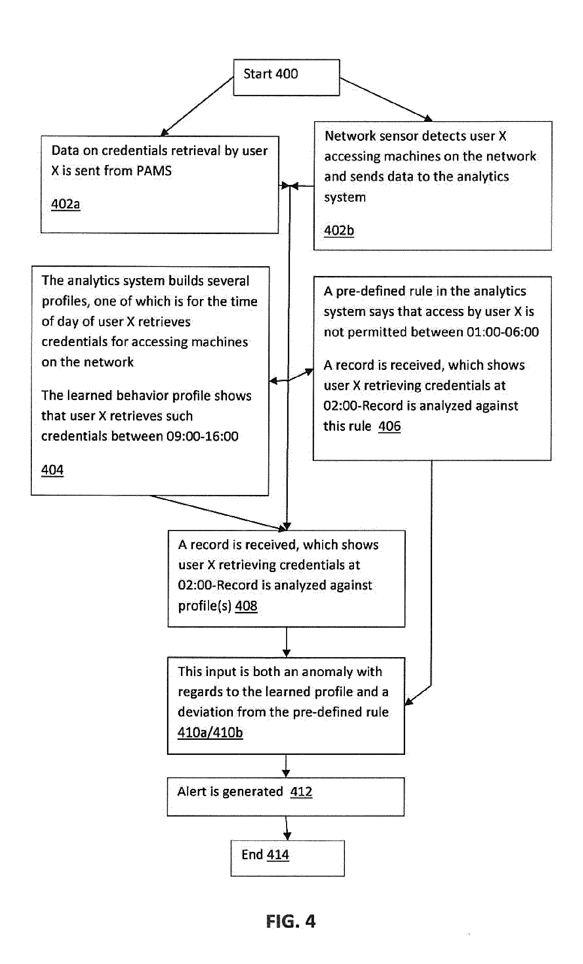

Attention is directed to FIG. 4, a flow diagram of the process of this Example. This process is also in accordance with the flow diagram of FIG. 3, with similar processes, subprocesses and steps to those of FIG. 3 indicated by corresponding boxes, increased by "100."

At block 400, the START block, the process starts. The process moves to parallel blocks 402a and 402b. At block 402a, data on credentials retrieved from PAMS 102 by an exemplary user, User X, is sent to the analytics system 100 from PAMS 102. At parallel block 402b, a network sensor, such as sensors 104, detects User X accessing machines on the network 50, represented by the network resource 110. The sensors 104 send data representative of User X's actions to the analytics system 100.

From blocks 402a and 402b, the process moves to parallel blocks 404 and 406, as well as to block 408. At block 404, the analytics system 100 builds several profiles, one of which is, for example, for the time of day User X retrieves credentials for accessing machines 110 on the network 50. The learned behavior profile, also referred to as "the profile," shows that User X retrieves such credentials between 09:00 and 16:00.

At block 406, there is a predefined rule, in the analytics system 100, states that "Access to the machines 110 by User X is not permitted between 01:00 and 06:00. A record is received by the analytics system 100 from PAMS 102, which shows User X having retrieved credentials for the machines 110 at 02:00. This record is analyzed against the rule.

At block 408, arriving from parallel blocks 402a and 402b, or block 404, a record is retrieved by the analytics system 100 from PAMS 102. The record shows User X retrieving credentials for the machines 110 at 02:00. The record is analyzed against the profile.

The process moves from blocks 406 and 408 to block 410a/410b. At block 410a, this 02:00 credentials retrieval is an anomaly in accordance with the profiles from block 404, and, a rule deviation at block 410b, from the predefined rules at block 406.

Since at least one event which triggers an alert at blocks 410a/410b, e.g., the anomaly has been detected, or a rule deviation has been detected, in this case both, has occurred, the process moves to block 412. At block 412, an alert is generated by the alerting module 408. With the alert(s) generated, the process moves to block 414, where it ends.

The above systems and processes are also suitable for use with network resources that are not based on privileged accounts and authorized privileges for various actions and access to computer resources.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, may be implemented by special purpose hardware-based systems that perform the specified functions or acts, or combinations of special purpose hardware and computer instructions.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant systems, including analytics modules, and optional alerting modules, with associated processors and storage/memory, will be developed and the scope of the term module, processors and storage/memory is intended to include all such new technologies a priori.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration." Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention. To the extent that section headings are used, they should not be construed as necessarily limiting.

## Claims

1. A computer-implemented method performed by a computer system for detecting improper actions associated with a resource accessible via a communications network, comprising:
obtaining, by a computer system, input data representative of information on client actions for an account associated with a resource accessible via the communications network, said account being managed by a privileged access management system;
building, by said computer system, a behavior profile for an entity associated with the resource, said profile built based on a statistical analysis of said input data;
obtaining, by a computer system, additional input data representative of information on client actions for an account associated with a resource accessible via the communications network, said account being managed by a privileged access management system; and
analyzing, by said computer system, said additional input data against said profile to detect anomalies.

2. The computer-implemented method of claim 1, wherein said profile is built dynamically.

3. The computer-implemented method of claim 1, wherein said profile is fixed in time.

4. The computer-implemented method of any of the previous claims, additionally comprising:
analyzing, by said computer system, said additional input data against predefined rules to detect deviations from said rules.

5. The computer-implemented method of claim 4, wherein when a deviation from said predefined rules is detected by said computer system, said computer system takes further action.

6. The computer-implemented method of any of the previous claims, wherein said entity is selected from the group consisting of: a privileged user or a group of privileged users, a resource or a group of resources, and a privileged command or a set of privileged commands.

7. The computer-implemented method of any of the previous claims, wherein said statistical analysis is based on metrics selected from the group consisting of: time of receiving said input data, rate of receiving said input data, internet protocol (IP) address of an origin of said input data, IP addresses range of origins of said input data, geographical location, type of events in said input data, and success/failure indication said input data.

8. The computer-implemented method of any of the previous claims, wherein when an anomaly is detected by said computer system, said computer system takes further action.

9. The computer-implemented method of claim 5, wherein said further action includes issuing alerts in response to a detection of said anomalies.

10. The computer-implemented method of any of the previous claims, wherein said input data includes reports from said resource about said client actions associated with said resource.

11. The computer-implemented method of any of the previous claims, wherein said client actions include access to said account associated with said resource.

12. The computer-implemented method of any of the previous claims, wherein said account is a privileged account managed by said privileged account management system; wherein said input data is obtained from said privileged account management system.

13. A computer system for detecting improper actions associated with a resource accessible via a network, comprising:
a storage medium for storing computer components; and,
a computerized processor for executing the computer components comprising:
a first component for obtaining input data representative of information on client actions for an account associated with a resource accessible via the communications network, said account being managed by a privileged access management system;
a second component for building a behavior profile for an entity associated with the resource, said profile built based on a statistical analysis of said input data;
said first component for obtaining additional input data representative of information on client actions for an account associated with a resource accessible via the communications network, said account being managed by a privileged access management system, and,
a third component for analyzing said additional input data against said profile to detect anomalies.

14. The system of claim 13, additionally comprising a fourth component for analyzing said additional input data against predefined rules to detect deviations from said rules.

15. The computer system of claim 14, additionally comprising: a fifth component for generating alerts to at least one location in response to the detection of at least one anomaly or a deviation from said predefined rules.
